Europäisches Patentamt

(19) European Patent Office    (11) Publication number: **0 171 156**

Office européen des brevets    **B1**

(12)    **EUROPEAN PATENT SPECIFICATION**

(45) Date of publication of patent specification: **30.03.88**    (51) Int. Cl.⁴: **F 16 D 1/04, F 16 D 1/08**

(21) Application number: **85304389.1**

(22) Date of filing: **19.06.85**

(54) **Shaft coupling.**

(30) Priority: **12.07.84 JP 145505/84**
**21.11.84 JP 246696/84**
**26.02.85 JP 38451/85**

(43) Date of publication of application:
**12.02.86 Bulletin 86/07**

(45) Publication of the grant of the patent:
**30.03.88 Bulletin 88/13**

(84) Designated Contracting States:
**DE FR GB SE**

(56) References cited:
**DE-A-3 219 746**
**FR-A- 983 390**
**FR-A-2 512 897**
**GB-A-1 047 869**
**GB-A-2 063 422**
**GB-A-2 084 293**
**GB-A-2 087 514**
**US-A-3 232 076**
**US-A-3 328 976**
**US-A-3 434 303**
**US-A-4 385 896**

(73) Proprietor: **Mochizuki, Masanori**
**1-28, Yasunakacho, 4-chome**
**Yao-shi Osaka-fu (JP)**

(72) Inventor: **Mochizuki, Masanori**
**1-28, Yasunakacho, 4-chome**
**Yao-shi Osaka-fu (JP)**

(74) Representative: **Stebbing, Peter John Hunter et al**
**F. J. CLEVELAND & COMPANY**
**40-43 Chancery Lane**
**London WC2A 1JQ (GB)**

## Description

This invention relates to a shaft coupling.

Various kind of shaft couplings such as a universal joint, a ball joint or an Oldham's joint, suitable for the conditions imposed upon the driving shaft and the driven shaft have been proposed.

However these improvements of shaft couplings have been confined to the joint mechanism between driving shaft and driven shaft. No improvement has been applied to the connections between the shafts and the shaft coupling.

Typical of a connection between shafts and shaft coupling is a key-fixation connection comprises key-grooves shaped on the outer surface of the shaft and on the inner surface of the cylindrical part of shaft coupling, and a key to be slid into the space formed by the key grooves. The key-fixation connection is widely used in various kinds of machines. However the key fixation connection has faults in that processing of key grooves is difficult, and that backlashes between shafts and shaft coupling are liable to occur when the shafts rotate in reciprocal directions.

The bolt-fixation connection comprises a shaft, a cylindrical part with a radially-bored bolt hole and a fixation bolt penetrating the bolt hole and contacting a side point of the shaft. This connection is free from the difficulty of processing and the occurrence of backlashes. However the bolt-fixation connection has another difficulty; eccentricity. Because the shaft is acted upon by the fixation bolt along a radial direction in the cylindrical part, the shaft center deviates from the center of the cylindrical part. In addition to the eccentricity between the shaft and the cylindrical part, another eccentricity is derived from the aberrance of center of gravity of the cylindrical part, because the cylindrical part has a single fixation bolt along a radius.

Because of the two eccentricities, the center of gravity of shaft coupling deviates from the center of driving shaft or driven shaft. The deviation of centers will induce strong transversal vibrations of shaft coupling when the shafts rotate at high speed.

The object of the invention is to provide a shaft coupling which prevents the occurrence of eccentricity between shafts and shaft coupling and which prevents backlashes between shafts and shaft coupling with high performance torque transmission.

Another object of the invention is to provide a shaft coupling which has a wide applicability to various kind of joint mechanisms.

The improvement brought about by this invention relates not to the joint mechanism itself but to the connection between shafts and shaft coupling.

FR—A—983,390 provides a shaft coupling comprising a joint portion, two resilient parts with a cylindrical inner surface and an outer threaded tapered surface fixed on the sides of the joint portion for supporting a driving shaft and a driven shaft therein and two tapered threaded tightening nuts for fitting to the threaded parts and pressing the threaded cylindrical parts upon the shafts; the screws and nuts each being provided with pressure flanks and clearance flanks. The invention is characterised in that the angle that each pressure flank forms with the axis of the coupling is less than 30° and greater than 10°.

By the tightening forces of the tightening nuts the inner cylindrical surface of the threaded parts are bent inwardly and are strongly pressed upon the outer surfaces of the shafts. Two shafts are coupled with the threaded parts by the forces with rotation symmetry.

Because the whole inner surfaces of the threaded parts contact with the shaft, there is no backlash between the cylindrical parts and the shafts.

Because the tightening nuts bend inward the threaded parts by the rotationally-symmetric force, no eccentricities occur between shafts and shaft coupling.

Following is a description by way of example only and with reference to the accompanying drawings of methods of carrying the invention into effect.

In the drawings

FIG. 1 is a disassembled sectional view of an embodiment of this invention applied to a universal joint of bellows type.

FIG. 2 is a sectional view taken along a line X—X in FIG. 1 in the connected state.

FIG. 3 is an enlarged sectional view of the threaded cylindrical part of the embodiment.

FIG. 4 is a perspective sectioned view of a connection part for explaining the tightening action of nut.

FIG. 5 is a sectional view of another example of threaded cylindrical part.

FIG. 6 is a sectional view of the other example of threaded cylindrical part.

FIG. 7 is a partially sectioned front view of another embodiment of the invention applied to a universal joint of transverse-axes type.

FIG. 8 is a sectional view of a further embodiment of the invention applied to a straight joint.

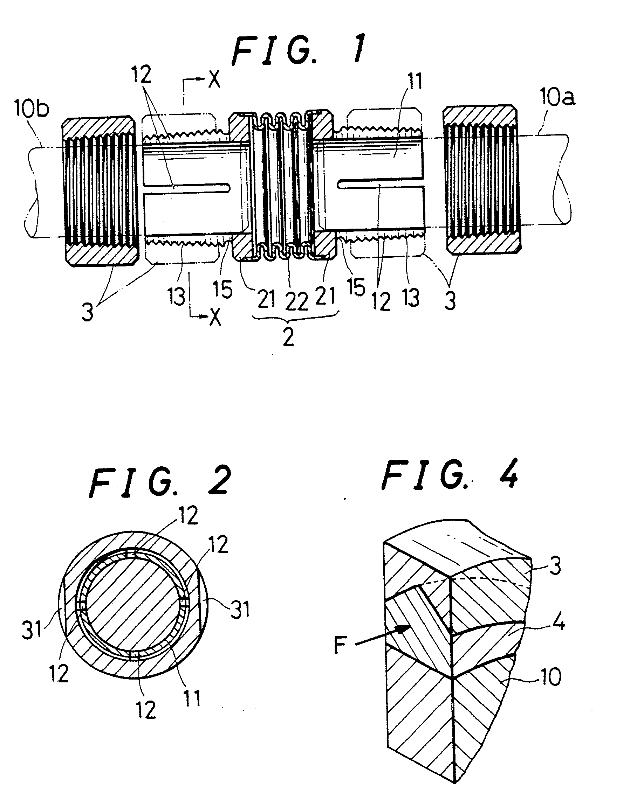

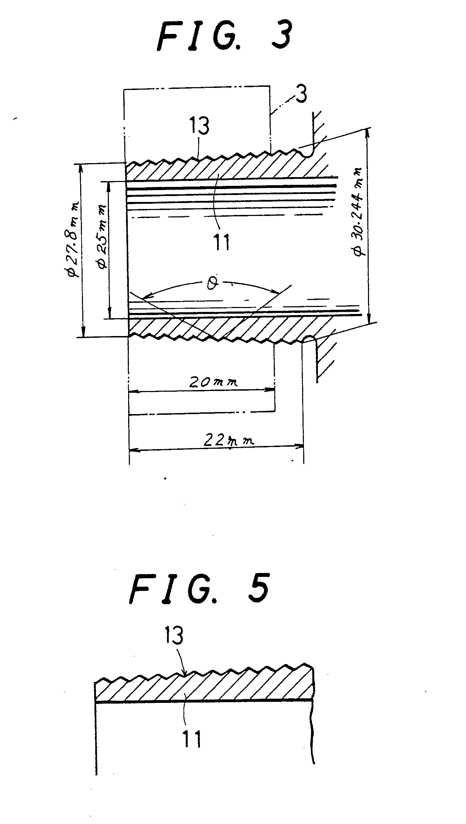

An embodiment of the invention is shown in FIG. 1 Fig. 2 and Fig. 3. This is an application of this invention to a universal joint of bellows type.

The shaft coupling consists of a joint portion and two parts 11 with an inner cylindrical surface and an outer tapered threaded surface 13. The joint portion 2 comprises an elastic bellows 22 and two side flanges which are the base ends of the parts 11. The parts 11 protrude on both sides of the joint portion 2.

The outer diameter of the tapered threaded surface 13 of parts 11 decreases divergently. Two circular grooves 15 are shaped between the flanges 21 and the inner ends of the parts 11. Four slits 12 are shaped along an axial direction on each of the parts 11.

Tightening nuts 3 have tapered inner female threads corresponding to the tapered threaded surface 13 of the part 11. A pair of parallel flat surfaces 31 and 31 are formed on the outer surface of the tightening nut 3. A tool such as a spanner can be fitted on the flat surfaces 31 to rotate the tightening nut 3.

The connecting operation will now be explained.

First, both tightening nuts 3 are loosely screwed onto the outer threaded surface 13 of the parts 11 as shown by doubly-dotted thin line (imaginary lines) in Figure 1. Second, a driving shaft 10a and a driven shaft 10b are inserted into the parts 11 as shown by doubly-dotted thin lines. Thirdly, the tightening nuts 3 are rotated to displace them inwardly in the axial direction. The parts 11 are bent inward and are pressed upon the outer surfaces of the shafts 10a and 10b.

Two shafts 10a and 10b are connected through the shaft coupling by the uniform frictional forces with rotation symmetry. The two shafts are now in a torque transmission state. Namely the torque of the driving shaft 10a is transmitted in succession through the one part 11, the joint portion 2 and the other part 11 to the driven shaft 10b.

In the connected state the tightening nuts 3 are fitted around the parts 11 with a concentric coordination. Thus the centre axis of effort of the connected portion coincides with the centre axis of the parts 11.

Furthermore no backlashes happen between shafts and shaft coupling, because the whole of the inner surfaces of the parts 11 are uniformly pressed upon the outer surfaces of the shafts.

I have been aware that the thread shape of the parts 11 and the screws 13 has a great influence upon the strength of transmission torque between the parts 11 and the driving shaft 10a, or the driven shaft 10b.

For example three specimens having same sizes of parts shown in figure 3 with different thread angles have been made for comparison. The effective thread length of part 11 is 22 mm. The length of the nut is 20 mm. The inner diameter of part 11 is 25 mm. The outer diameter of the outer end of the threaded surface 13 of part 11 is 27.8 mm. The outer diameter of the inner end of the threaded surfaces 13 of part 11 is 30.244 mm. The pitches of the threads of the three specimens are common.

But the specimens have different thread edge angles. The thread angles θ of the specimens NO: 1, NO: 2, and NO: 3 are 60 degrees, 120 degrees and 150 degrees. The maximum transmission torques of the specimens NO: 1 to NO: 3 was then measured keeping the tightening torques of nuts in common at 392,4 Nm.

The results are shown in Table 1.

This experiment shows that a bigger thread angle enables us to transmit a bigger torque under the condition of the same tightening torques of nuts.

TABLE 1
MAXIMUM TRANSMISSION TORQUES THREAD ANGLES

| SPECIMEN NO. | THREAD ANGLE | MAXIMUM TRANSMISSION TORQUE | TIGHTENING TORQUE OF NUT |
|---|---|---|---|
| 1 | 60° | 176,6 Nm | 392,4 Nm |
| 2 | 120° | 363 Nm | 392,4 Nm |
| 3 | 150° | 431,6 Nm | 392,4 Nm |

It is believed that the grounds for this phenomenon are as follows. The tightening nut 3 presses the part 11 upon the driving shaft 10a or the driven shaft 10b and can be considered to be the operational equivalent to a single female thread of the nut 3 pressing a circular wedge 4 having a pentagonal section ie: one male thread of the part 11 upon the shaft 10 as shown in Figure 4.

In this implified mechanism a bigger thread angle clearly induced a bigger pressure acting between the wedge 4 and the shaft 10 when subjected to a constant force F because the pressure acting upon the contact region of the nut 3 and the shaft 10 can be transmitted to the wedge 4 with a higher performance by a bigger thread angle.

In this analogy the thread angle corresponds to the thread angle of the tapered threaded surface 13 of part 11 and the penetrating force F for pushing the wedge 4 inwardly corresponds to the tightening torque of the nut 3. Accordingly the bigger thread angle is able to enlarge the maximum transmission torque under the constant tightening torque of nut.

An annular surface of a single thread is called a "flank". The inner inclined flank is called a "pressure flank", because this flank receives a strong pressure. The outer-inclined flank is called a "clearance flank", because this flank does not contact with a flank of other thread in the case of tight coupling of screw threads.

The flanks of the tapered threaded surface 13 are symmetric about a plane perpendicular to the axial direction of the part 11 in the example shown in Figure 3.

0 171 156

Figure 5 shows another example of the tapered threaded surface 13; the flank of the thread are symmetric with slant planes symmetrically disposed relative to the exterior surface of the tapered threaded surface 13.

This tapered threaded surface 13 has a threaded angle wider than those of the example of Figure 3. Furthermore the flank angle obtaining between the pressure flank and the axial line is smaller than that of the example of figure 3. The wider the thread angle and the smaller flank angle between the pressure flank and the axial line the more enlarged the maximum transmission torque under constant torque of the nuts.

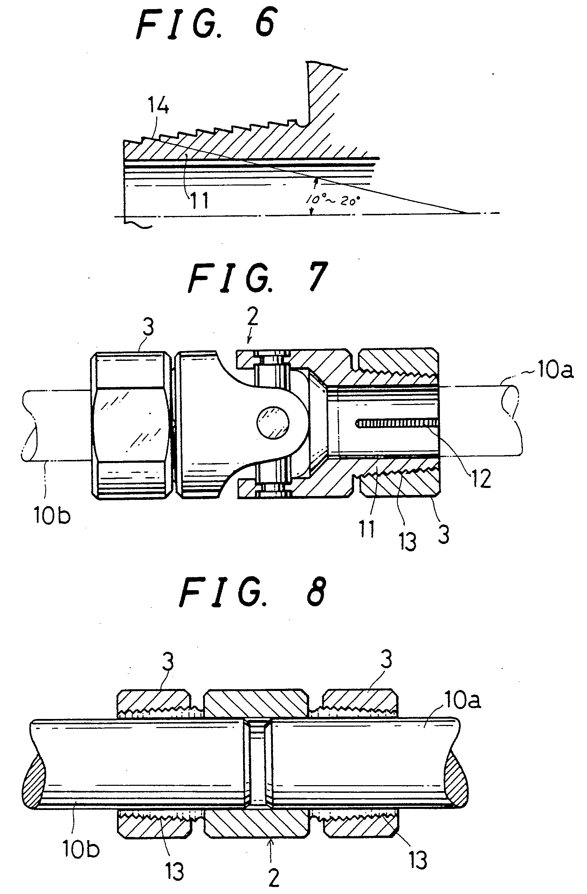

Figure 6 shows another example of a tapered threaded surface 14 of higher performance torque transmission. The sectional shape of the tapered threaded surface 14 resembles a saw. The clearance flank of the saw-shaped thread is perpendicular to the axial line of the part 11. The pressure flank has a small flank angle to the axial line. The flank angle of the pressure flank is between 10° and 20°.

In this example nearly all of the contacting regions of the nut 3 and the part 11 is occupied by the pressure flanks. The wide pressure flanks are able to transmit large torque between the parts 11 and the driving or driven shafts under the condition of constant tightening torque of nut.

In practice too small a screw pitch is to difficult to achieve because of the difficulty of working; although smaller screw pitches are more desirable to avoid excess reduction of the part 11.

However even in the case of a large pitch, a screw with wide edge angle or a saw-shaped screw enables the effective thickness of the part 11 to be kept in an appropriate range.

In other words even a very thin threaded cylindrical part ensures a reasonable width of screw pitch in these cases. A thin threaded cylindrical part is able to increase the elasticity of the part 11. Thus the maximum transmission torque under the constant tightening torque of the nut 3 can be increased by use of a thin threaded cylindrical part when a screw with a wide edge angle or the saw-shaped screw is used.

A screw with a wide edge angle or a saw-shaped screw has another advantage. Because of the high elasticity, the outer ends of the threaded cylindrical parts are easily bent inward and pressed upon the shafts at the beginning of tightening tapered screws by the nuts 3. The shafts are therefore fixed by the pressure of the threaded cylindrical parts at an early stage of assembly. The pressure prevents the shaft joining from rotating with the tightening nuts.

Accordingly there is no need to fix the shaft coupling mechanically while the nut is tightened.

This invention has a wide applicability to various kinds of shaft couplings.

Figure 7 shows another embodiment. This is a universal joint with two traversely coupled axes. The connection parts are improved by this invention.

Figure 8 shows the other embodiment. This is a straight shaft coupling. The shaft coupling transmits thrust forces in addition to rotational forces. The connection between shafts and shaft coupling are improved by this invention.

Of course this invention can be applied to other kinds of shaft coupling.

The shaft coupling of the invention can be made from metals, plastics or combinations of metals and plastics. In special circumstances more elastic materials such as rubber can be used to form some portions of the shaft coupling.

**Claims**

1. A shaft coupling comprising a joint portion (2), two resilient parts (11) with a cylindrical inner surface and an outer threaded tapered surface (13) fixed to the sides of the joint portion (2) for supporting a driving shaft (10a) and a driven shaft (10b) therein and two tapered threaded tightening nuts (3) for fitting to the tapered parts (13) and pressing the threaded cylindrical parts (11) upon the shafts (10a) and (10b); the screws and nuts each being provided with pressure flanks and clearance flanks; characterized in that the angle that each pressure flank forms with the axis of the coupling is less than 30° and greater than 10°.

2. A shaft coupling as claimed in claim 1 wherein the resilient part (11) has slits (12) parallel with the axis.

3. A shaft coupling as claimed in claim 1 or claim 2, wherein the tapered threaded surface (13) and the tapered inner female threads of the tightening nut (3) have saw-shaped sections.

**Patentansprüche**

1. Wellenkupplung mit einem Gelenkteil (2), zwei federnden Teilen (11) mit einer zylindrischen Innenfläche und einer mit einem Gewinde versehenen konischen Außenfläche (13) zu beiden Seiten des Gelenkteiles (2) zur inneren Aufnahme einer treibenden Welle (10a) und einer getriebenen Welle (10b) und mit zwei konischen Gewindespannbuchsen (2), die den konischen Außenflächen (13) zuzuordnen sind und die mit Gewinde versehenen zylindrischen Teile (11) auf die Wellen (10a) und (10b) pressen, wobei sowohl die Schrauben als auch die Spannbuchsen mit Druckflanken und Spielflanken versehen sind, dadurch gekennzeichnet, daß der Winkel, den jede Druckflanke mit der Längsachse der Kupplung einschließt, kleiner als 30° und größer als 10° ist.

2. Wellenkupplung, wie in Anspruch 1 beansprucht, wobei jedes federnde Teil (11) parallel zur Längsachse verlaufende Schlitze (12) aufweist.

3. Wellenkupplung, wie in Anspruch 1 oder Anspruch 2 beansprucht, wobei die konische Gewindefläche (13) und die konischen inneren Aufnahmegewinde der Spannbuchse (3) sägezahnförmige Abschnitte haben.

## Revendications

1. Accouplement d'arbres comprenant une partie de jonction (2), deux parties élastiques (11) à surface interne cylindrique et à surface externe conique et filetée (13) fixées sur les côtés de la partie de jonction (2) pour supporter à l'intérieur un arbre d'entraînement (10a) et un arbre entraîné (10b), et deux écrous de serrage à filetage conique (3) destinés à coopérer avec les parties coniques (13) et à presser les parties cylindriques filetées (11) sur les arbres (10a, 10b); les vis et les écrous étant respectivement munis de flancs de pression et de flancs de jeu; caractérisé en ce que l'angle formé par chaque flanc de pression avec l'axe d'accouplement est inférieur à 30° et supérieur à 10°.

2. Accouplement d'arbres selon la revendication 1, dans lequel la partie élastique (11) comprend des fentes (12) parallèles à l'axe.

3. Accouplement d'arbres selon la revendication 1 ou la revendication 2, dans lequel la surface filetée conique (13) et les filets internes femelles coniques de l'écrou de serrage (3) on des sections en dents de scie.

# FIG. 1

# FIG. 2

# FIG. 4

1

# FIG. 3

13    3

11

φ27.8mm    φ25mm    φ30.244mm

θ

20mm

22mm

# FIG. 5

13

11

## F I G. 6

14

11

10° ~ 20°

## F I G. 7

3   2

~10a

10b

11  13  3

12

## F I G. 8

3   3

10a

10b   13   2   13